**Europäisches Patentamt**

**European Patent Office**

**Office européen des brevets**

(19)

(11) Veröffentlichungsnummer: **0 436 803 A2**

(12)

# EUROPÄISCHE PATENTANMELDUNG

(21) Anmeldenummer: **90121759.6**

(22) Anmeldetag: **14.11.90**

(51) Int. Cl.⁵: **C08F 8/46**

(30) Priorität: **29.12.89 DE 3943280**

(43) Veröffentlichungstag der Anmeldung:
**17.07.91 Patentblatt 91/29**

(84) Benannte Vertragsstaaten:
**DE FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Müller, Michael, Dr.**
**Mecklenbecker Strasse 177**
**W-4400 Münster(DE)**

(54) **Additionsprodukte aus Polyoctenylen und Maleinsäureanhydrid bzw. einem Fumarsäuredialkylester, Verfahren zu deren Herstellung sowie deren Verwendung.**

(57) Additionsprodukte aus Polyoctenylen und Maleinsäureanhydrid bzw. einem Fumarsäuredialkylester, Verfahren zu deren Herstellung sowie deren Verwendung
Um das Einsatzspektrum von Polyoctenylen zu erweitern, wird daran in Lösung Maleinsäureanhydrid bzw. ein Fumarsäuredialkylester in Gegenwart eines Vergelungsinhibitors und unter Schutzgasatmosphäre bei Temperaturen von 160 bis 260 °C addiert. Die Additionsprodukte finden zur Herstellung von Kautschukblends sowie zur Schlagzähmachung von Thermoplasten Verwendung.

EP 0 436 803 A2

## ADDITIONSPRODUKTE AUS POLYOCTENYLEN UND MALEINSÄUREANHYDRID BZW. EINEM FUMARSÄUREDIALKYLESTER, VERFAHREN ZU DEREN HERSTELLUNG SOWIE DEREN VERWENDUNG

Es ist bekannt, daß cyclische Olefine, die mindestens eine nicht substituierte Ringdoppelbindung aufweisen, mit Hilfe sogenannter Metathesekatalysatoren unter Öffnung des Ringes polymerisiert werden können (DE-OSS 15 70 940, 16 45 038, 17 20 798, 17 70 143 und 18 05 158, DE-AS 12 99 868, GB-PSS 1 124 456, 1 194 013 und 1 182 975).

In der Regel besitzen die Doppelbindungen in den durch ringöffnende Polymerisation - gegebenenfalls durch Zusatz eines Molekulargewichtreglers - erhaltenen Produkte (Polyalkenamere) überwiegend trans-Konfiguration.

Von den metathetisch poymerisierbaren Cycloolefinen hat besonders das Cycloocten großtechnische Bedeutung und Anwendung gefunden. Die aus diesem Monomeren hergestellten Polymeren werden als Polyoctenylene bzw. Polyoctenamere und aufgrund der bevorzugten trans-Konfiguration der Doppelbindungen auch als trans-Polyoctenylene bzw. trans-Polyoctenamere bezeichnet.

Bis heute werden Polyoctenylene bevorzugt als Verschnittkomponente zur Herstellung spezieller Kautschukblends sowie zur Modifizierung von Thermoplasten eingesetzt. Aufgrund der weitgehend unpolaren Struktur der Polyalkenamere und somit auch des Polyoctenylens sind Wechselwirkungen, die zu einer Verträglichkeit bzw. Mischbarkeit führen, nur mit Blendkomponenten vergleichbar unpolaren Charakters möglich. Denkt man darüber hinaus an breite Einsatzgebiete von mit Polyalkenameren hergestellten Blends, ist nicht nur die Frage der Verträglichkeit der Blendkomponenten von grundlegender Bedeutung, sondern im besonderen auch die Möglichkeit zur Phasenankopplung durch chemische Reaktion sowie deren Ausmaß.

Aufgabe der Erfindung war es daher, Polyalkenamere mit einem relativ breiten Einsatzspektrum bereitzustellen.

Diese Aufgabe wurde überraschenderweise durch Additionsprodukte aus Polyoctenylen und Maleinsäureanhydrid bzw. einem Fumarsäuredialkylester gelöst, die durch ausgewählte Verfahrensmaßnahmen hergestellt wurden.

Polymeres Ausgangsmaterial für die erfindungsgemäßen Additionsprodukte ist nach bekannten Verfahren des Standes der Technik hergestelltes Polyoctenylen, d. h. aus Cycloocten mit Hilfe sogenannter Metathesekatalysatoren erhaltenes Reaktionsprodukt. Diese Katalysatoren enthalten bekanntlich Verbindungen von Metallen der 5. bis 7. Nebengruppe des Periodischen Systems der Elemente (PSE), vornehmlich des Niobs, Tantals, Molybdäns, Wolframs und Rheniums sowie Metalle der 1. bis 4. Hauptgruppe des PSE bzw. deren Alkyle oder Hydride, gegebenenfalls mit weiteren Liganden, wie z. B. Halogen, Alkoxyl oder Carboxylat, oder an ihrer Stelle Lewis-Säuren. Außerdem können weitere aktivierende Zusätze, wie z. B. Alkohole, Epoxide, Hydroperoxide, Vinyl- und Allylether und -ester, Vinylhalogenide und aromatische Nitroverbindungen, Bestandteil des Katalysatorsystems sein.

Die Polymerisation kann in allen Lösemitteln durchgeführt werden, welche als geeignet bei der Polymerisation mit Hilfe von Ziegler-Natta-Katalysatoren bekannt sind. Die wichtigsten Vertreter aus der Gruppe der aliphatischen, alicyclischen, aromatischen und halogenierten Kohlenwasserstoffe sind folgende: Pentan, Hexan, Heptan, n- und iso-Octan, Isononan (hydriertes Trimerpropen), n-Decan, Isododecan (hydriertes Tetramerpropen), Cyclopentan, Cyclohexan, Methylcyclopentan, Methylcyclohexan, Ethylcyclohexan, Isopropylcyclohexan, Cyclooctan, Decahydronaphthalin, hydrierte Terpene, wie Pinan und Camphan, Cyclohexen und seine Substitutionsprodukte, Benzol, Toluol, o-, m-, p-Xylol, Ethylbenzol, o-, m-, p-Diethylbenzol, n-Propylbenzol, Isopropylbenzol und andere Mono- bis Polyalkylbenzole, Tetrahydronaphthalin, Methylenchlorid, Chloroform, Tetrachlorkohlenstoff, 1,2-Dichlorethylen, Trichlorethylen, Tetrachlorethylen, Chlorbenzol, o-Dichlorbenzol, Trichlorbenzol (Isomerengemisch), Brombenzol, Fluorbenzol, 1,2-Dichlorethan.

Wesentlich ist, daß die Lösemittel durch geeignete Reinigung möglichst frei von Wasser und anderen H-aciden Verbindungen sowie Verbindungen mit Donatorfunktionen (Lewis-Basen) eingesetzt werden. Außer sehr kleinen Mengen, die gegebenenfalls zur Erzielung bestimmter Effekte zugesetzt werden, beeinträchtigen solche Verunreinigungen im allgemeinen die Aktivität des Katalysators.

Die übliche Polymerisationstemperatur liegt zwischen -50 und +80 °C. Sie wird nach oben durch die thermische Stabilität des Katalysators und nach unten durch die zu weit herabgesetzte Reaktionsgeschwindigkeit begrenzt. Vorteilhaft arbeitet man bei Temperaturen zwischen -30 und +60 °C, vorzugsweise aber im Bereich zwischen 0 und +50 °C, der besonders leicht realisierbar ist.

Die Molekulargewichte der Polyoctenylene können durch den Zusatz offenkettiger - wahlweise auch funktionell substituierter - Olefine in weiten Grenzen eingestellt werden (DE-OS 29 22 335 und DE-PSS 19 19 047, 19 45 358, 20 27 905, 20 28 935, 21 05 161 und 21 57 405).

Die zur Erreichung einer bestimmten Konsistenz notwendige Menge Regler hängt naturgemäß von der Art des Reglers, vom verwendeten Katalysator und den übrigen Polymerisationsbedingungen ab; die erforderliche Menge, die bis zu 50 Molprozent, bezogen auf eingesetztes Monomeres, betragen kann, läßt sich durch wenige Vorversuche leicht ermitteln.

Wenn der erwünschte oder erreichbare Umsatz sich eingestellt hat, desaktiviert man den Katalysator durch Zugabe eines Alkohols, wie z. B. Methanol, oder einer anderen H-aciden Verbindung.

Die so erhaltene Lösung kann vorzugsweise direkt ohne weitere Maßnahmen, wie z. B. Katalysatorabtrennung, für die Additionsreaktion eingesetzt werden. Selbstverständlich kann auch ein aufgearbeitetes Polyoctenylen, d. h. ein weitgehend von aus der Polymerisation stammenden Verbindungen (Monomere, Lösemittel, Katalysatorreste etc.) befreites Produkt durch Wiederauflösung in einem der oben angeführten Lösemittel bzw. Mischungen daraus für die Additionsreaktion eingesetzt werden.

Im allgemeinen werden Polyoctenylene mit einem Molekulargewicht ($M_w$ = Gewichtsmittel des Molekulargewichts) bis zu 200 000, vorzugsweise zwischen 20 000 und 150 000, eingesetzt. Der trans-Gehalt liegt zwischen 50 und 90 % , bevorzugt zwischen 55 und 85 %.

Die Lösungsviskosität (J-Wert bestimmt in Toluol bei 25 °C und einer Konzentration von 0,005 g/cm$^3$) der einsetzbaren Polyoctenylene beträgt 80 bis 200 ml/g, vorzugsweise 100 bis 150 ml/g.

Die Polyoctenylenkonzentration in der für die Additionsreaktion verwendeten Lösung kann in einem weiten Bereich variieren, in der Regel wird jedoch eine 5- bis 60gewichtsprozentige, vorzugsweise eine 20- bis 55gewichtsprozentige, und ganz besonders bevorzugt eine 35- bis 45gewichtsprozentige Lösung eingesetzt.

Als Lösemittel können dabei alle diejenigen Verwendung finden, die bereits bei der metathetischen Polymerisation von Cycloocten Verwendung finden konnten. Bevorzugte Lösemittel sind allein oder im Gemisch aliphatische gesättigte Kohlenwasserstoffe, wie z. B. Pentan, Hexan, Heptan und Octan, und Aromaten, wie z. B. Toluol und o-, m-, p-Xylol.

Weitere Einsatzstoffe neben der Polyoctenylenlösung sind einmal Maleinsäureanhydrid (MSA), ein wohlfeiles Handelsprodukt, zum anderen Fumarsäuredialkylester mit 1 bis 4 Kohlenstoffatomen in der Alkylgruppe, die aus dem Veresterungsalkohol stammt. Bevorzugt wird Fumarsäurediethylester, ebenfalls ein Handelsprodukt, eingesetzt.

Das Maleinsäureanhydrid bzw. der Fumarsäuredialkylester wird im allgemeinen in einer Menge bis zu 20, vorzugsweise bis zu 10 und besonders bevorzugt bis zu 5 Gewichtsprozent, bezogen auf Polyoctenylen eingesetzt. Die unter Grenze sollte 0,3 Gewichtsprozent nicht unterschreiten.

Erfindungswesentlich bei der Umsetzung der Polyoctenylenlösung mit Maleinsäureanhydrid bzw. einem Fumarsäuredialkylester ist die Gegenwart einer Verbindung, die eine Vergelung des Polyoctenylens unter den gegebenen Reaktionsbedingungen verhindert.

Geeignete Vergelungsinhibitoren sind solche, die in der Kautschuktechnologie als Alterungsschutzmittel für Festkautschuke Verwendung finden. Sie stammen gewöhnlich aus der Gruppe der aromatischen Amine, sowie deren Kondensationsprodukte mit Aldehyden und Ketonen, der Phenole, der Mercaptoverbindungen und der Sulfide ("Roh- und Hilfsstoffe in der Gummiindustrie", VEB Deutscher Verlag für Grundstoffindustrie, Leipzig, 1968, Seiten 213 - 216). Zur Herstellung der erfindungsgemäßen Additionsprodukte sind als Vergelungsinhibitoren besonders solche aus der Gruppe substituierter p-Phenylendiamine, wie z. B. N-Isopropyl-N-phenyl-p-phenylendiamin, N-(1,3-Dimethyl-butyl)-N-phenyl-p-phenylendiamin und N,N-Di-(1,4-dimethylphenyl)-p-phenylendiamin, geeignet.

Im allgemeinen werden die Vergelungsinhibitoren in einer Menge bis zu 3,5 Gewichtsprozent, vorzugsweise in einer Menge von 0,05 bis 1,5 Gewichtsprozent, und besonders bevorzugt in einer Menge von 0,07 bis 0,5 Gewichtsprozent, jeweils bezogen auf Polyoctenylen, eingesetzt.

Wichtig ist, daß die Umsetzung des Polyoctenylen in Lösung mit Maleinsäureanhydrid bzw . einem Fumarsäuredialkylester in Gegenwart eines Vergelungsinhibitors und einer Schutzgasatmosphäre durchgeführt wird. Übliche Schutzgase sind Stickstoff und die Edelgase, vorzugsweise Argon.

Die Temperatur, bei der die Additionsreaktion im allgemeinen durchgeführt wird, liegt im Bereich von 160 bis 260 °C. Bevorzugt ist der Temperaturbereich von 200 bis 240 °C.

Im allgemeinen führt man die Additionsreaktion wie folgt durch:

Vorgelegt wird eine 5- bis 60-gewichtsprozentige Polyoctenylenlösung,vorzugsweise direkt aus der Polymerisation kommend, in einem rührbaren Druckautoklaven. Dann erfolgt die Zugabe von Vergelungsinhibitor und Maleinsäureanhydrid bzw. Fumarsäuredialkylester jeweils in den erforderlichen Mengen. Nach dem Verschließen des Druckautoklaven und der Einstellung der Inertgasatmosphäre wird auf die gewünschte Reaktionstemperatur aufgeheizt. Der Umsatz des eingesetzten Maleinsäureanhydrids bzw. des Fumarsäuredialkylesters hängt von deren Menge, der Reaktionsdauer, der Reaktionstemperatur sowie der Konzentration der Polyoctenylenlösung ab. Es wird ein möglichst vollständiger Umsatz des Maleinsäureanhydrids bzw. Fumarsäuredialkylesters angestrebt. Nach Erreichen des möglichen Umsatzes wird die Reaktionstemperatur abgesenkt und der Ansatz in an sich bekannter Weise durch Ausfällung oder Abdestillation des Lösemittels aufgearbeitet. Die Lösungsviskosität der Additionsprodukte liegt in der Größenordnung der des eingesetzten Polyoctenylens.

Die erfindungsgemäßen Additionsprodukte eignen sich als Blendkomponente für Kautschukcompounds mit polaren Kautschuken sowie als Schlagzähkomponente in Thermoplasten, wie z. B. Polyamide und Polyphenylenether.

Die Erfindung wird durch die nachfolgenden Beispiele näher beschrieben.

Beispiel 1

In einen 2 l rührbaren Druckautoklaven werden 787 9 einer Polyoctenylenlösung mit einem Feststoffgehalt von 43,3 Gewichtsprozent gegeben; das gelöste Polyoctenylen hat einen trans-Gehalt von 80 % und einen J-Wert von 118 ml/g; hinzukommen 3,41 g Maleinsäureanhydrid (entsprechend 1 Gewichtsprozent, bezogen auf den Feststoff Polyoctenylen) sowie 0,34 g N-Isopropyl-N-phenyl-p-phenylendiamin (entsprechend 0,1 Gewichtsprozent, bezogen auf Polyoctenylen). Nach dem Verschließen des Druckautoklaven wird zur Einstellung einer Inertgasatmosphäre mehrmals mit Stickstoff gespült. Über eine Mantelbeheizung wird der Reaktorinhalt auf eine Temperatur von 220 ° C aufgeheizt, wobei sich ein Druck von 28 bar im Reaktionsraum einstellt.Die Rührung erfolgt mit 250 U/min. Nach einer Reaktionsdauer von 180 Minuten wird die Reaktionstemperatur abgesenkt, eine Probe des Ansatzes für eine polarographische Bestimmung des freien, nicht umgesetzten Maleinsäureanhydrids abgenommen und der Ansatz durch Abdestillation des Lösungsmittels aufgearbeitet.

Beispiele 2 bis 14

In der gleichen Apparatur und nach der gleichen Arbeitsweise wie im Beispiel 1 angegeben werden unter veränderten Versuchsparametern (Konz. MSA/Fumarsäurediethylester, Reaktionstemperatur, Reaktionsdauer, Feststoffkonzentration Polyoctenylen) weitere Additionsprodukte hergestellt. In den Beispielen 13 und 14 wird dabei anstelle von MSA Fumarsäurediethylester in zwei verschiedenen Konzentrationen eingesetzt. Die einzelnen Versuchsparameter und die J-Werte der Additionsprodukte sind - zusammen mit den entsprechenden Werten des Beispiels 1 in der nachfolgenden Tabelle zusammengestellt.

4

Tabelle

| Bsp. | MSA Gew.-% | MSA gebunden Gew.-% | Temp. [°C] | Reaktions- dauer [min] | Feststoff- konzentration Polyoctenylen Gew.-% | J-Wert des Additions- produktes [ml/g] |
|---|---|---|---|---|---|---|
| 1 | 1 | 0,99 | 220 | 180 | 43,3 | 122 |
| 2 | 4 | 3,87 | 220 | 180 | 43,3 | 117 |
| 3 | 10 | 9,05 | 220 | 180 | 43,3 | 130 |
| 4 | 1 | 0,13 | 160 | 180 | 43,3 | 110 |
| 5 | 1 | 0,47 | 190 | 180 | 43,3 | 114 |
| 6 | 1 | 1,03 | 230 | 180 | 43,3 | 121 |
| 7 | 2 | 0,73 | 220 | 30 | 43,3 | 114 |
| 8 | 2 | 1,36 | 220 | 120 | 43,3 | 107 |
| 9 | 2 | 1,79 | 220 | 150 | 43,3 | 123 |
| 10 | 1 | 0,42 | 220 | 180 | 10,0 | 138 |
| 11 | 1 | 0,73 | 220 | 180 | 30,0 | 126 |
| 12 | 1 | 1,05 | 220 | 180 | 50,0 | 139 |
| 13 | 1* | 0,54* | 220 | 180 | 43,3 | 131 |
| 14 | 10* | 5,70* | 220 | 180 | 43,3 | 105 |

* Maleinsäureanhydrid (MSA) durch Fumarsäurediethylester ersetzt

Beispiel 15

Ein Polyamid 12 ($n_{rel}$ = 1,9, gemessen in m-Cresol, mehr als 50 % $NH_2$-Endgruppen) wird mit 20 Teilen eines Polyoctenylens mit 0,7 Gewichtsprozent an gebundenem Maleinsäureanhydrid verschnitten. Die Herstellung des Compounds erfolgt in einem gleichsinnig drehenden Zweiwellenkneter mit abwechselnd fördernden und scherenden Elementen (Berstorff ZE 25, 33,5 D) bei einer Temperatur von 220 °C bis 250 °C, einem Durchsatz von 3 kg/h sowie einer Drehzahl von 150 U/min.

Für das Compound ergeben sich folgende anwendungstechnische Daten:

Kerbschlagzähigkeit (gemessen nach IZOD ISO 180):

23 °C    10 angebrochen

0 °C    10 angebrochen

-20 °C    76 kJ/m

-40 °C    60 kJ/m


Reißdehnung (DIN 53 455): > 150 %

E-Modul (DIN 53 457)    :    800 N/mm$^2$


**Patentansprüche**

1. Additionsprodukte aus Polyoctenylen und Maleinsäureanhydrid bzw. einem Fumarsäuredialkylester, hergestellt durch Umsetzung von Polyoctenylen in Lösung mit Maleinsäureanhydrid bzw. einem Fumarsäuredialkylester in Gegenwart eines Vergelungsinhibitors und unter Schutzgasatmosphäre bei Temperaturen von 160 bis 260 ° C.

2. Additionsprodukte gemäß Anspruch 1,
dadurch gekennzeichnet,
daß man die Umsetzung bei Temperaturen von 200 bis 240 ° C durchführt.

3. Additionsprodukte gemäß Anspruch 1,
dadurch gekennzeichnet,
daß man Fumarsäuredialkylester mit 1 bis 4 Kohlenstoffatomen in der Alkylgruppe einsetzt.

4. Additionsprodukte gemäß Anspruch 3,
dadurch gekennzeichnet,
daß man Fumarsäurediethylester einsetzt.

5. Additionsprodukte nach den Ansprüchen 1 bis 4,
dadurch gekennzeichnet,
daß man das Maleinsäureanhydrid bzw. den Fumarsäuredialkylester in einer Menge bis zu 20 Gewichtsprozent, bezogen auf Polyoctenylen, einsetzt.

6. Additionsprodukte nach den Ansprüchen 1 bis 5,
dadurch gekennzeichnet,
daß man den Vergelungsinhibitor in einer Menge bis zu 3,5 Gewichtsprozent, bezogen auf Polyoctenylen, einsetzt.

7. Additionsprodukte nach Anspruch 6,
dadurch gekennzeichnet,
daß man den Vergelungsinhibitor in einer Menge von 0,05 bis 1,5 Gewichtsprozent, bezogen auf Polyoctenylen, einsetzt.

8. Verfahren zur Herstellung von Additionsprodukten aus Polyoctenylen und Maleinsäureanhydrid bzw. Fumarsäuredialkylester,
dadurch gekennzeichnet,
daß man Polyoctenylen in Lösung mit Maleinsäureanhydrid bzw. Fumarsäuredialkylester in Gegenwart eines Vergelungsinhibitors und unter Schutzgasatmosphäre bei Temperaturen von 160 bis 260 ° C umsetzt.

9. Verwendung der Additionsprodukte gemäß den Ansprüchen 1 bis 7 bzw. erhalten nach dem Verfahren des Anspruchs 8 zur Herstellung von Kautschukblends sowie zur schlagzähmachung von Thermoplasten.